# FASCICULE DE BREVET EUROPEEN

(11) **EP 0 409 688 B1**
(45) Date de publication et mention de la délivrance du brevet: **27.10.1993**
(21) Numéro de dépôt: 90401932.0
(22) Date de dépôt: 04.07.1990
(51) Int. Cl.: F16L 55/04, F17D 1/20, F25J 3/04

(54) **Procédé et installation pour fournir un gaz à un réseau d'utilisation**
Verfahren und Einrichtung zum Versorgen eines Gasnetzes mit einem Gas
Process and installation for supplying gas to a gas distribution network

(30) Priorité: 19.07.1989 FR 8909695
(43) Date de publication de la demande: 23.01.1991
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Bosquain, Maurice, F-06501 Menton (FR); Lehman, Jean-Yves, F-94700 Maisons Alfort (FR)
(74) Mandataire: Le Moenner, Gabriel

(56) Documents cités:
- FR-A- 2 352 230
- FR-A- 2 381 234
- GB-A- 2 136 095

## Description

La présente invention concerne la fourniture à un réseau d'utilisation d'un gaz provenant d'une source de gaz et passant dans un échangeur de chaleur et dans une vanne de laminage avant de parvenir au réseau. Elle s'applique notamment au cas où le gaz est produit par un appareil cryogénique tel qu'une double colonne de distillation d'air, mais également à d'autres procédés produisant des gaz à une température très différente de la température ambiante.

Pour pouvoir alimenter le réseau de façon fiable, il est nécessaire de produire le gaz à une pression légèrement supérieure à la pression maximale du réseau, et donc d'effectuer une certaine détente du gaz dans une vanne de laminage.

Or, la vanne de laminage est habituellement constituée par une vanne dite de production qui se trouve à la périphérie de l'installation, et la détente s'accompagne de bruit, qui rayonne dans les collecteurs de distribution et se propage dans la veine gazeuse.

Pour réduire ce bruit, on peut placer un silencieux en aval de la vanne de production, mais un tel silencieux provoque lui-même une perte de charge qui rend l'installation plus coûteuse en énergie, et il constitue un investissement supplémentaire et est encombrant.

L'invention a pour but de réduire le bruit transmis dans le réseau sans faire appel à un silencieux.

A cet effet, l'invention a pour objet un procédé du type ci-dessus, caractérisé en ce qu'on fait passer le gaz à travers une unique vanne de laminage régulée située en amont de l'échangeur de chaleur, le gaz sortant de l'échangeur étant à la pression du réseau.

Dans un mode de mise en oeuvre particulièrement simple, on régule ladite vanne sur un débit constant, et on dérive du réseau le gaz éventuellement excédentaire par rapport à la demande de ce réseau.

L'invention a également pour objet une installation destinée à la mise en oeuvre d'un tel procédé, selon la revendication 3.

Le document FR-A-2.381.234 décrit une installation pour amortir les pulsations d'une installation d'évaporation de gaz liquéfié comprenant une vanne de production en aval de l'évaporateur et d'une connexion à une ligne d'amenée de gaz en surpression provenant du ciel gazeux du réservoir de gaz liquéfié.

Le procédé selon l'invention est particulièrement efficace lorsque l'échangeur de chaleur est du type à plaques.

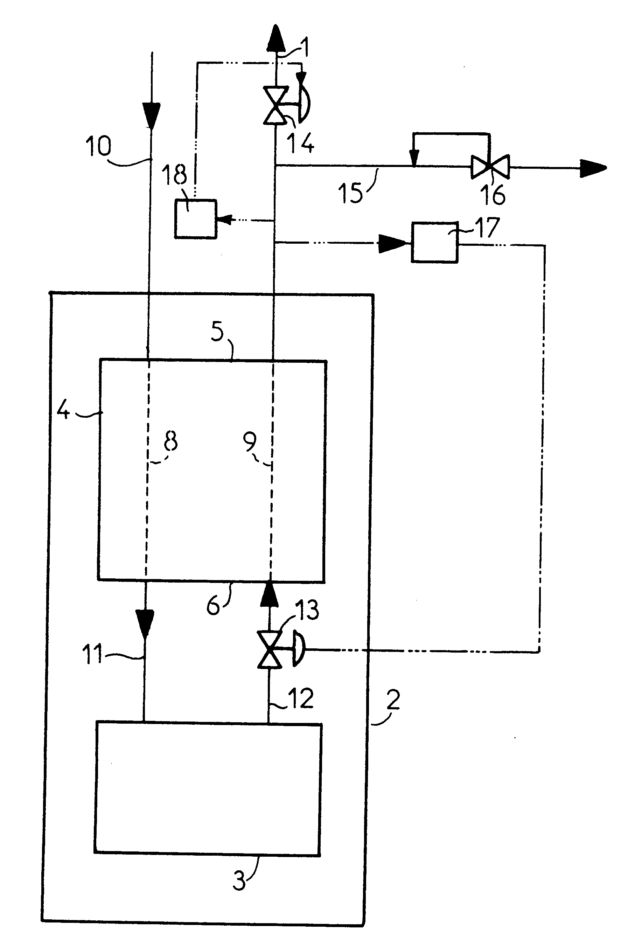

Un exemple de mise en oeuvre de l'invention va maintenant être décrit en regard du dessins annexé, dont la figure unique représente schématiquement une installation conforme à l'invention.

L'installation représentée au dessin est destinée à fournir un gaz de l'air, que l'on supposera être de l'azote pour la commodité de la description, à un réseau d'utilisation alimenté par une conduite de production 1. Le réseau est à une pression légèrement supérieure à la pression atmosphérique ; cette pression varie quelque peu en fonction de la demande, tout en restant inférieure à une pression maximale déterminée, que l'on supposera par exemple égale à 1,2 x 10⁵ Pa absolu.

L'installation comprend une boîte froide 2 thermiquement isolée contenant d'une part un appareil cryogénique 3 de séparation d'air, par exemple constitué par une double colonne de distillation d'air, et d'autre part un échangeur de chaleur 4 du type à plaques.

Les échangeurs de chaleur du type à plaques sont classiques dans la technique de distillation d'air. Ils comprennent une multitude de plaques d'aluminium parallèles qui définissent entre elles des passages plats de grandes dimensions dans lesquels circulent les fluides mis en relation d'échange thermique, c'est-à-dire d'une part l'air en cours de refroidissement, d'autre part les différents gaz produits par l'installation, en cours de réchauffement. Chacun des passages plats contient des ondes en aluminium formant entretoises et ailettes et est délimité par des barrettes verticales et horizontales. L'ensemble de l'échangeur de chaleur est assemblé par brasage au four. Il possède une extrémité 5, appelée bout chaud, dont la température est voisine de la température ambiante, et une extrémité 6, appellé bout froid, dont la température est voisine du point de rosée de l'air comprimé à séparer.

Pour les besoins de la présente description, on ne considérera que l'échange de chaleur, effectué à contre-courant, entre l'air à séparer et le gaz à fournir au réseau, c'est-à-dire l'azote. Ainsi, on n'a représenté au dessin que les passages 8 de refroidissement d'air et les passages 9 de réchauffement de l'azote. Une conduite 10 d'arrivée d'air comprimé à séparer, épuré en eau et en CO2, est reliée au bout chaud des passages 8 ; une conduite 11 relie le bout froid de ces passages 8 à l'entrée d'air de l'appareil 3 ; une conduite 12 relie la sortie d'azote de l'appareil au bout froid des passages 9 ; et la conduite 1 est reliée au bout chaud de ces passages 9.

L'installation comporte encore une vanne de laminage régulée 13 équipant la conduite 12, et, en dehors de la boîte froide 2 :
- une vanne d'arrêt 14, dite vanne de production, équipant la conduite 1 ;
- en amont de cette vanne, une conduite de mise à l'air 15 piquée sur la conduite 1 et équipée d'une vanne 16 ; cette dernière fonctionne en déverseur, c'est-à-dire en régulateur de pression amont ;
- un débitmètre 17 mesurant le débit gazeux s'écoulant dans la partie de la conduite 1 située en amont de la conduite 15 et commandant la vanne 13 ; et
- un analyseur 18 de l'azote produit, analysant par exemple la composition du gaz qui circule dans la conduite 1, cet analyseur commandant la vanne 14.

La vanne 16 est réglée pour s'ouvrir dès que la pression dans la conduite 15 dépasse une valeur de consigne égale à la pression maximale du réseau, soit 1,2 bar. Le débitmètre 17 compare le débit mesuré à une valeur de consigne correspondant à la production de l'appareil 3 et commande la vanne 13 de façon à annuler l'écart.

En fonctionnement normal de l'installation, l'échangeur 4 provoque une petite perte de charge, par exemple de 0,1 bar. L'azote est produit par l'appareil 3 à débit constant sous une pression légèrement supérieure à la pression maximale du réseau augmentée de cette perte de charge, donc légèrement supérieure à 1,3 bar. Cet azote possède la pureté requise, et l'analyseur 18 maintient la vanne 14 ouverte. La vanne 13 est régulée en débit à partir du signal fourni par le débitmètre 17, de façon que le débit traversant cette vanne soit constamment égal au débit de l'azote produit. La vanne 16 reste fermée et ne s'ouvre que si la pression du réseau atteint sa valeur maximale, pour mettre à l'air l'azote excédentaire.

Dans cette situation, la détente d'azote accompagnant la régulation de débit s'effectue dans la vanne froide 13, c'est-à-dire à l'intérieur de l'isolation thermique de la boîte froide. Ceci assure une première atténuation du bruit lié à la détente. De plus, la veine gazeuse détendue traverse l'échangeur 4, qui joue lui-même le rôle de silencieux du fait de la très grande surface des passages d'azote et de la perte de charge qu'il crée nécessairement pour favoriser l'échange thermique. ainsi, un bruit très fortement atténué parvient à l'extérieur de l'installation et est transmis au réseau.

En cas d'incident conduisant à une dégradation de la pureté de l'azote, l'analyseur 18 provoque la fermeture de la vanne 14, de sorte que tout l'azote produit est mis à l'air par la conduite 15. Lorsque la pureté requise est atteinte (cas du démarrage) ou retrouvée, l'analyseur 18 ouvre de nouveau la vanne 14 ou, en variante, émet un signal d'autorisation d'ouverture de cette vanne, l'ouverture étant effectuée manuellement par un opérateur.

Ainsi, dans toutes les situations, l'installation ne transmet au réseau qu'un bruit très atténué. On remarque que le bruit provoqué par les mises à l'air, qui est de toute manière généralement peu gênant, est également très atténué puisque c'est du gaz déjà détendu qui parvient à la vanne 16. Si on le désire, la conduite 15 peut d'ailleurs être équipée d'un silencieux peu coûteux, peu encombrant et n'induisant aucune dépense d'énergie supplémentaire.

## Revendications

1. Procédé pour fournir à un réseau d'utilisation un gaz provenant d'une source de gaz et passant dans un échangeur de chaleur (4) et dans une vanne de laminage avant de parvenir au réseau, caractérisé en ce qu'on fait passer le gaz à travers une unique vanne de laminage régulée (13) située en amont de l'échangeur, le gaz sortant de l'échangeur étant à la pression du réseau.

2. Procédé selon la revendication 1, caractérisé en ce qu'on régule ladite vanne (13) sur un débit constant, et on dérive du réseau le gaz éventuellement excédentaire par rapport à la demande de ce réseau.

3. Installation pour fournir un gaz à un réseau d'utilisation, du type comprenant une source de gaz (3), un échangeur de chaleur (4), un circuit (12, 9, 1) de transfert du gaz de la source au réseau, traversant l'échangeur et comportant une vanne de laminage, caractérisée en ce qu'elle comporte une unique vanne de laminage régulée (13) disposée dans le circuit entre la source de gaz (3) et l'échangeur (4).

4. Installation selon la revendication 3, comprenant en outre une vanne de mise à l'air (16), caractérisée en ce que la vanne de laminage (13) est régulée sur un débit constant, et en ce qu'elle comporte une vanne de mise à l'air fonctionnant en déverseur dans une conduite (15) de mise à l'air reliée au circuit, en aval de l'échangeur (4).

5. Installation selon la revendication 4, caractérisée en ce que le circuit comporte, en aval de la conduite (15) de mise à l'air, une vanne d'arrêt (14) commandée par un analyseur (18) de la qualité du gaz.

6. Installation selon l'une des revendications 3 à 5, caractérisée en ce que l'échangeur de chaleur (4) est du type à plaques.

7. Installation selon l'une des revendications 3 à 6, caractérisée en ce que l'échangeur (4) et la vanne de laminage (13) sont disposés dans une boîte froide (2).

8. Installation selon la revendication 7, caractérisée en ce que la source de gaz (3) est disposée dans la boîte froide (2).

9. Installation selon la revendication 8, caractérisée en ce que la source de gaz (3) est un appareil de séparation d'air.

## Patentansprüche

1. Verfahren zum Versorgen eines Gasnetzes mit einem Gas, das aus einer Gasquelle kommt und einen Wärmetauscher (4) und ein Entspannungsventil durchläuft, bevor es in das Gasnetz gelangt, dadurch gekennzeichnet, daß das Gas über ein einziges geregeltes Entspannungsventil (13) geleitet wird, das stromaufwärts von dem Wärmetauscher angeordnet ist, wobei das aus dem Wärmetauscher austretende Gas unter dem gleichen Druck wie im Gasnetz steht.

2. Verfahren nach Anspruch 1, dadurch gekennzeichnet, daß das Ventil (13) auf einen konstanten Durchfluß geregelt wird, und daß das bezüglich des Bedarfs des Gasnetzes möglicherweise überschüssige Gas von diesem Gasnetz abgezweigt wird.

3. Anlage zum Versorgen eines Gasnetzes mit einem Gas, mit einer Gasquelle (3), einem Wärmetauscher (4), einem den Wärmetauscher durchlaufenden und ein Entspannungsventil aufweisenden Kreis (12, 9, 1) zum Transport des Gases aus der Quelle ins Gasnetz, dadurch gekennzeichnet, daß sie ein einziges geregeltes Entspannungsventil (13) aufweist, das in dem Kreis zwischen der Gasquelle (3) und dem Wärmetauscher (4) angeordnet ist.

4. Anlage nach Anspruch 3, mit zusätzlich einem Ablaßventil (16), dadurch gekennzeichnet, daß das Entspannungsventil (13) auf einen konstanten Durchfluß geregelt ist, und daß sie ein Abblasventil aufweist, das als Überdruckventil in einer Abblasleitung (15) arbeitet, die stromabwärts vom Wärmetauscher (4) an den Kreis angeschlossen ist.

5. Anlage nach Anspruch 4, dadurch gekennzeichnet, daß der Kreis stromabwärts von der Abblasleitung (15) ein Absperrventil (14) aufweist, das von einem Gasqualitätsanalysator (18) gesteuert ist.

6. Anlage nach einem der Ansprüche 3 bis 5, dadurch gekennzeichnet, daß der Wärmetauscher (4) ein Plattentauscher ist.

7. Anlage nach einem der Ansprüche 3 bis 6, dadurch gekennzeichnet, daß der Wärmetauscher (4) und das Entspannungsventil (13) in einer Cold-Box (2) angeordnet sind.

8. Anlage nach Anspruch 7, dadurch gekennzeichnet, daß die Gasquelle (3) in der Cold-Box (2) angeordnet ist.

9. Anlage nach Anspruch 8, dadurch gekennzeichnet, daß die Gasquelle (3) eine Lufttrennanlage ist.

## Claims

1. Process for supplying a gas to a distribution network, which gas comes from a gas source and passes through a heat exchanger (4) and a throttle valve before arriving at the network, characterised in that the gas is passed through a single regulated throttle valve (13) situated upstream from the exchanger, the gas leaving the exchanger being at the network pressure.

2. Process according to claim 1, characterised in that the said valve (13) is regulated at a constant flow, and any excess gas relative to the requirements of the network is diverted from this network.

3. Installation for supplying a gas to a distribution network, of the type comprising a gas source (3), a heat exchanger (4), and a circuit (12, 9, 1) for transferring the gas from the source to the network, which circuit passes through the exchanger and comprises a throttle valve, characterised in that it comprises a single regulated throttle valve (13) arranged in the circuit between the gas source (3) and the exchanger (4).

4. Installation according to claim 3, further comprising an airing valve (16), characterised in that the throttle valve (13) is regulated at a constant flow, and in that it comprises an airing valve operating as a discharging device in an airing pipe (15) connected to the circuit, downstream from the exchanger (4).

5. Installation according to claim 4, characterised in that the circuit comprises, downstream from the airing pipe (15), a stop valve (14) controlled by a gas quality analyzer (18).

6. Installation according to one of claims 3 to 5, characterised in that the heat exchanger (4) is of the type having plates.

7. Installation according to one of claims 3 to 6, characterised in that the exchanger (4) and the throttle valve (13) are arranged in a cold box (2).

8. Installation according to claim 7, characterised in that the gas source (3) is arranged in the cold box (2).

9. Installation according to claim 8, characterised in that the gas source (3) is an air separation apparatus.
